Europäisches Patentamt

**European Patent Office**

**Office européen des brevets**

(19)

(11) Publication number:

**0 093 509**

**A1**

(12) **EUROPEAN PATENT APPLICATION**

(21) Application number: 83301895.5

(22) Date of filing: 05.04.83

(51) Int. Cl.³: **G 06 F 3/023**

(30) Priority: 28.04.82 GB 8212261

(43) Date of publication of application:
09.11.83 Bulletin 83/45

(84) Designated Contracting States:
AT BE CH DE FR GB IT LI LU NL SE

(71) Applicant: FISONS plc
Fison House Princes Street
Ipswich Suffolk IP1 1QH(GB)

(72) Inventor: O'Connell, John Patrick
12 Honeybourne Road
Halesowen West Midlands(GB)

(74) Representative: Craig, Christopher Bradberry et al,
Fisons plc 12 Derby Road
Loughborough Leicestershire LE11 0BB(GB)

(54) A combination of a program carrying device and overlay, and a computational instrument.

(57) A combination of a device (4) carrying a program, suitable for use with and separate from a portable computational instrument (1) having a keyboard (12), and an overlay for the keyboard which indicates the functions of the keys with respect to the particular program carried by the device (4). This provides a flexible instrument for use in laboratories and other environments.

Fig.1

EP 0 093 509 A1

Croydon Printing Company Ltd.

## A COMBINATION OF A PROGRAM CARRYING DEVICE AND OVERLAY, AND A COMPUTATIONAL INSTRUMENT

The present invention relates to a combination of a program carrying device and overlay, and to a computational instrument.

In laboratories, notably in schools and other educational establishments, there are often a number of instruments fulfilling a variety of different tasks; e.g. thermometers, timers, pH meters and the like. We have now devised a measuring device which comprises a computational instrument which can be programmed to fulfil a number of functions. By providing a portable instrument which is flexible, it is possible both to reduce the number of instruments required in a laboratory and to provide a useful tool for other environments, such as field work, where it would not be practical to use a large number of separate instruments.

It has been proposed to use computational instruments to control the operation of a wide range of electrical and mechanical devices. However, in such cases the instrument has been programmed to operate a specific machine in response to certain signals, and has been dedicated to that specific operation. It has also been proposed to provide the ability to feed a number of different types of signal into a computational instrument which is programmed in a corresponding number of ways to evaluate and display the signals in a useable form, e.g as a temperature or pH unit reading. However, in such proposals the operator uses the same keyboard to operate the instrument whatever the function the device is monitoring. This requires that the user remember the various different functions assigned to the keys and the relationship of those values to the function being monitored.

It has also been proposed to use a computational instrument to monitor a number of pre-determined functions in a chemical plant and to provide the instrument with a number of overlays for the keyboard thereof. The overlays carry means for indicating to the instrument which portion of the program within the permanent memory of the instrument is to be used to carry out the functions corresponding to the overlay. However, such a system is not flexible and if it is desired to use the computational instrument to monitor a different function from those contained in its memory, it is necessary to reprogram the entire functions of the instrument. Since the memory capacity is limited, this may result in certain functions having to be discarded to make room for the program for the new function. Also, the instrument is used with a series of fixed sensors at given locations and is not

. portable.

The present invention overcomes these disadvantages by providing a portable, flexible system for computing a range of laboratory measurements.

Accordingly the invention comprises a computational instrument comprising a separate program input source, a keyboard, means for feeding electrical signals into the instrument, a programmable memory and input means for receiving a program from the separate program input source; characterised in that functionally paired with a given program input source is an overlay for the keyboard.

The overlay indicates the function of the keyboard with respect to the given program input source with which it is paired.

Preferably, the instrument is provided with either means for the output of information or with a memory for the storage of information for later retrieval. Most preferably, it is provided with both.

Preferably the means for the output of information comprise a visual display, eg cathode ray tube, light emitting diodes or liquid crystals. Alternatively the output may be linked to a chart recorder, printer or oscilloscope, or to pre-recorded voice message system. A further alternative is that the output may be linked to a computer or other data processing machine.

According to a second aspect, the invention comprises a device carrying a program, suitable for use with and separate from a computational instrument having a keyboard, and an overlay for the keyboard characterised in that the overlay indicates the function of the keys with respect to the program.

Preferably, the device carrying the program comprises a read only memory integrated circuit.

Alternatively, the device may comprise magnetic means for carrying the program, eg a magnetic tape, disc or cassette.

The keyboard may be either of the touch panel type in which case a flat overlay may be used, or of the type similar to that used for a conventional typewriter in which the keys project from the keyboard in which case the overlay must be suitably adapted, eg by being provided with holes through which the keys can project.

Preferably the overlay and/or the keyboard are provided with means to ensure they are correctly aligned.

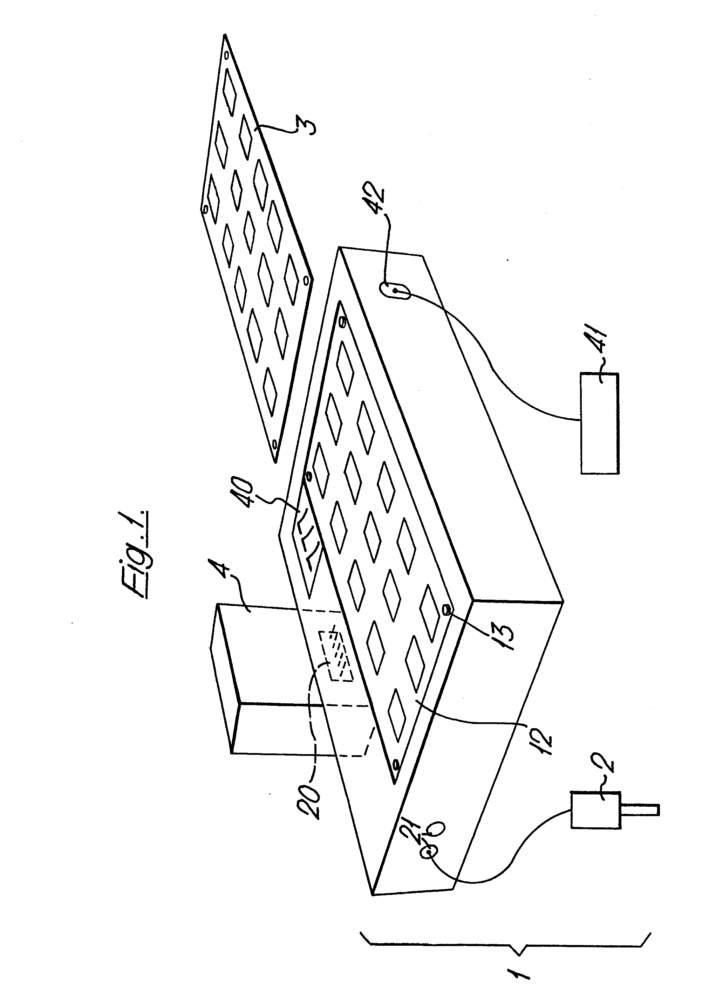

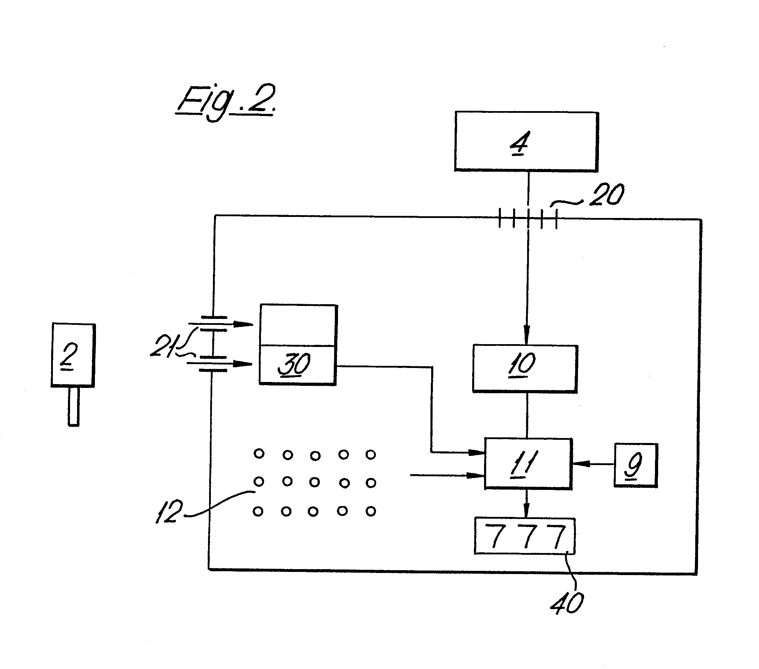

To aid understanding of the invention, it will be described with reference to a preferred form thereof as shown diagrammatically in the accompanying drawings in which Figure 1 is a perspective view of the computational instrument and Figure 2 is a block diagram for some of the components within the instrument.

The device of the invention comprises a computational instrument 1, a sensor 2, e.g. a transducer, feeding electrical signals to be monitored into the instrument, an overlay 3 for the keyboard on the instrument, which overlay carries the functions assigned to various of the keys by a separate program input source 4. If a different phenomenon is to be monitored, the sensor 2 is changed and a new pair of keyboard overlay 3 and program input source 4 are used to change the function of the instrument. The device of the invention can thus be readily changed by simple operations to fulfil a range of functions. Where a new function over and above the existing range is to be introduced, this is simply achieved by writing a new program and making a new program input source and overlay. It is not necessary to modify the instrument itself nor to discard some of the existing programs to make way for the new one. Furthermore, by providing the instrument with a battery power source, it is possible to make the device of the invention totally self-contained so that it can be used in a wide range of locations, e.g. in different class rooms or laboratories or in field experiments.

The computational instrument for present use can be selected from a wide range of designs and may have a programmable memory 10, and a read only memory 9 and a microprocessor 11. Whilst these can be combined in a single integrated circuit, they will usually comprise a large volume of memory. We therefore prefer to provide separate random access memory integrated circuits and separate pre-programmed read only memory integrated circuits. Typically, the read only memory integrated circuit will have a capacity of from 1 to 4K bytes, and the random access memory integrated circuits will have a total capacity of from 1 to 2K bytes. It is possible for further random access memory, preferably of capacity of from 8K to 24K bytes, to be provided as an external accessory which can be linked to the computational instrument or for the computational instrument to be linked to a second computational instrument, eg a microprocessor or computer.

The computational instrument is also provided with a keyboard 12 adapted to actuate the integrated circuits. This keyboard can be of any suitable type. For convenience we prefer to use an alpha-numeric keyboard, e.g. one housing ten numeric keys (0-9) and a number of alpha and labelled keys. Alternatively symbols, or braille characters, could be used. It is also preferred that the keyboard be of the touch panel type so that the overlays can lie directly upon the flat surface of the touch panel keyboard. If desired, means for retaining and locating the overlay are provided. For example, a rim may be provided around the key board to form a recess into which the overlay 3 seats, and/or one or more locating pegs 13 may be used to co-operate with apertures in the overlay. A further alternative is the provision of tabs on the overlay which locate in corresponding recesses in the keyboard profile.

The computational instrument is provided with means 20 for receiving the input from the separate program input source. This can take the form of a multi-pin input connector, e.g. to receive signals from a cassette player where a cassette is used to carry the input program. The separate program input source may be connected directly or via a ribbon cable. It is preferred that the input program be carried by a separate read only memory integrated circuit contained in a suitable program module which is plugged into an input part 20 of the instrument. The capacity of the read only memory integrated circuit is preferably from 2 to 8K bytes, and most preferably 4K bytes.

The computational instrument is also provided with means 21, e.g. connectors, for receiving at least one and preferably up to eight simultaneous signals from one or more sensors 2 observing the phenomenon to be monitored by the instrument. These sensors will usually be external, e.g. a pH electrode or a temperature transducer, and will generate an electrical signal, which is led via suitable sockets 21, into the computational instrument. The signals may be either analog or digital, and analog signals may be converted into digital form using conventional means 30. Once the required program carried on the separate program input source has been received via the input means 20, the separate program input source may be disconnected and the means 20 may be used, in addition to means 21, for the input of electrical signals from one or more sensors 2. (Sockets 20 and 21 could, if desired, be combined).

The computational instrument may be provided with means for displaying the information from the monitoring operation. This can take the form of a visual display 40 - e.g. an alpha numeric display using light emitting diodes or liquid crystals; or can take the form of a separate external device 41, e.g. a chart recorder, printer, or cathode ray tube, or a pre-recorded voice message system fed via an output socket 42 from the instrument. (Sockets 42 and 20 may, if desired, be combined). It is also within the scope of the present invention to store the information from the monitoring operation within the computational instrument, e.g. on a further memory integrated circuit, for recovery and display at a later time. Alternatively, either the output may be fed directly via output socket 42 to a second computational instrument, eg another computational instrument of the same type or a microprocessor or computer. In this way the computational instrument may be used as an interface device for a wide variety of further computational and information storage devices.

Alpha-numeric messages may be included in the programming of the instrument and these may be combined with the information from the measuring operation in order to present the information clearly, e.g. the unit of measurement may follow the numeric value computed, eg 10 OHMS, which confirms to the user that the particular function now in operation is the measurement of electrical resistance.

The computational instrument is provided with one or more overlays for the keyboard 12. These can comprise an apertured sheet member adapted to lie on the keyboard with some or all of the keys visible and actuatable through the apertures.

The function of each key is indicated adjacent to relevant aperture, e.g. by suitable wording and/or symbols. However, where a touch panel type keyboard is used, it is preferred that the overlay take the form of a substantially flat sheet of plastics or other material which locates directly on to the keyboard. The outer face of the overlay carries markings, e.g. wording and/or symbols, indicating the function which the underlying key pad is to fulfil. If desired, the overlay can be provided with apertures to engage with locating pins on the keyboard and/or can be shaped so that it can only operate when correctly aligned and orientated on the keyboard, e.g. the overlay can be provided with tabs which locate in corresponding recesses in the keyboard profile.

As indicated above, the function of the computational instrument is controlled by an external program input source which carries the program appropriate to the phenomenon which the instrument is to monitor. The program is carried on any suitable means, e.g. a cassette tape, a magnetic disc or most preferably on a read only memory integrated circuit contained in a program module. The overlay and the program input source are a co-operating pair and, if desired, can carry identifying features to ensure that they are correctly paired up. For example each can carry a corresponding colour code or can carry a signal read by the computational instrument which must correctly correspond before the instrument can be actuated. In some cases more than one overlay may be paired with a given program input source. It will be appreciated that a wide range of accessories and sensors to provide suitable input signals may be used with the instrument, and that the use of a given accessory or sensor may be linked with a cooperating pair of overlay and program input source.

The computational instrument is conveniently powered from an external electric mains source using a conventional transformer/rectifier if desired. However, if desired an internal or external battery power source can be used to make the whole device self-contained.

Claims:-

1.    A combination of a device (4) carrying a program, suitable for use with and separate from a computational instrument (1) having a keyboard (12); and an overlay (3) for the keyboard (12); characterised in that the overlay (3) indicates the functions of the keys with respect to the program.

2.    A combination according to claim 1 in which the device (4) comprises a read only memory integrated circuit.

3.    A combination according to claim 1 in which the device (4) comprises magnetic means for carrying the program.

4.    A combination according to claim 3 in which the magnetic means comprise a magnetic tape, disc or cassette.

5.    A combination according to any of the preceding claims with means to provide for the correct alignment of the overlay (3) and the keyboard (12).

6.    A computational instrument (1) comprising a separate program input source (4), a keyboard (12), means (21) for feeding electrical signals into the instrument, a programmable memory (10), input means for receiving the program from the separate input source, and an overlay (3) for the keyboard (12); characterised in that the overlay (3) is functionally paired with a given program input source (4).

7.   An instrument according to claim 6 provided with means (40) for the output of information.

8.   An instrument according to claim 7 in which the means (40) for the output of information comprise a visual display.

9.   An instrument according to any one of claims 6 to 8 in which information can be stored for later retrieval.

10.   A portable computational instrument (1) which comprises a touch panel keyboard (12), means (21) for feeding electrical signals into the instrument, means (20) for receiving a program from a separate program input source (4), and a microprocessor (11) with a programmable memory (10) which can receive the electrical signals and the program; the separate program input source (4) comprising a read only memory integrated circuit; and an overlay (3) for the keyboard (13); characterised in that the overlay (3) is paired with a given program input source (4) and indicates the function of each underlying touch panel of the keyboard (13) for that program.

_Fig.1._

0093509

0093509

Fig.2

## EUROPEAN SEARCH REPORT

Application number

EP 83 30 1895

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 281 390 (OLANDER, JR. et al.) <br> * Abstract; figures 1,3A,3B; column 3, lines 21-55; column 7, line 62 - column 8, line 29 * | 1,2 | G 06 F 3/023 |
| Y | | 3-5 | |
| X | DE-A-2 922 875 (SARTORIUS GmbH) <br> * Figures 1,2; claims 1-5; page 3, line 10 - page 4, line 23 * | 1,2,5 | |
| Y | | 3,4,6-10 | |
| Y | US-A-4 202 041 (KAPLOW et al.) <br> * Abstract; figures 1,4; column 11, lines 14-46 * | 3,4,10 | TECHNICAL FIELDS SEARCHED (Int. Cl. ³) <br><br> G 06 F |
| Y | US-A-3 600 592 (MAHAN et al.) <br> * Abstract; figures 1-3; column 2, line 48 - column 3, line 19 * | 5 | |
| Y | US-A-4 200 913 (KUHAR et al.) <br> * Abstract; figure 2; column 7, lines 13-20 * | 6-9 | |

The present search report has been drawn up for all claims

| Place of search | Date of completion of the search | Examiner |
|---|---|---|
| THE HAGUE | 08-08-1983 | BECKER K.H. |